# FASCICULE DE BREVET EUROPEEN

(11) **EP 1 403 158 B1**
(45) Date de publication et mention de la délivrance du brevet: **17.12.2008**
(21) Numéro de dépôt: 03292343.5
(22) Date de dépôt: 24.09.2003
(51) Int. Cl.: B60T 8/00, B60G 17/015, B60K 28/16

(54) **Véhicule automobile équipé d'un dispositif de pilotage de liaison au sol**
Mit einer Vorrichtung zum Steuern der Verbindung zum Boden ausgerüstetes Kraftfahrzeug
Motor vehicle equipped with a device for controlling the link to the ground

(30) Priorité: 25.09.2002 FR 0211858
(43) Date de publication de la demande: 31.03.2004
(73) Titulaire: Peugeot Citroën Automobiles SA, 92200 Neuilly sur Seine (FR)
(72) Inventeur: Abadie, Vincent, 78500 Sartrouville (FR)

(56) Documents cités:
- WO-A-01/89898
- DE-A- 4 039 005
- DE-A- 10 056 549
- DE-A- 19 838 337
- MILLWARD J P: "ELECTRONIC SYSTEM ARCHITECTURE" AUTOMOTIVE ENGINEERING, SOCIETY OF AUTOMOTIVE ENGINEERS. WARRENDALE, US, vol. 101, no. 4, 1 avril 1993 (1993-04-01), pages 15-17, XP000360931 ISSN: 0098-2571

## Description

L'invention concerne en général les véhicules automobiles équipés d'une pluralité de dispositifs de liaison au sol pilotés électroniquement, et les systèmes de coordination de ces différents dispositifs.

Plus précisément, l'invention concerne un véhicule automobile comprenant une caisse, deux roues avant et deux roues arrière, et une pluralité de dispositifs pilotés électroniquement, tels qu'un dispositif de freinage, une direction, un dispositif de suspension de la caisse, un moteur, et un différentiel.

L'utilisation de dispositifs de liaison au sol pilotés électroniquement se généralise depuis le début des années 90. Sont ainsi apparus progressivement les dispositifs de freinage pilotés permettant d'éviter le blocage des roues sur sol peu adhérent (ABS) et de contrôler la stabilité du véhicule (ESP, ASR) en association avec le contrôle moteur, la direction assistée électro-hydraulique qui permet de faire varier l'assistance en fonction de la vitesse du véhicule, puis les dispositifs de suspension pilotés et actifs qui permettent d'améliorer le compromis confort/ comportement routier du véhicule.

DE 4039005 A décrit un véhicule automobile selon le préambule de la revendication 1.

L'association de plusieurs de ces dispositifs sur un même véhicule entraîne une augmentation de la complexité de la mise au point, des risques de conflit entre les moyens d'action des différents dispositifs, et des difficultés pour assurer la sûreté de fonctionnement du véhicule et la sécurité des passagers dans toutes les situations.

Dans ce contexte, la présente invention a pour but de pallier les difficultés mentionnées ci-dessus en proposant un véhicule automobile muni d'un dispositif de pilotage de la liaison au sol permettant de coordonner les actions des différents dispositifs de liaison au sol et du moteur.

A cette fin, le véhicule automobile de l'invention, par ailleurs conforme à la définition générique qu'en donne le préambule ci-dessus, est essentiellement caractérisé en ce que les dispositifs pilotés électroniquement comprennent un premier ensemble de capteurs déterminant un premier vecteur de paramètres représentatifs de l'état des dispositifs pilotés électroniquement et un ensemble d'actionneurs permettant de modifier l'état de ces dispositifs, le véhicule comprenant un second ensemble de capteurs déterminant un second vecteur de paramètres représentatifs de l'état du véhicule, tels que des vitesses et des accélérations suivant plusieurs axes, et un dispositif de pilotage de la liaison au sol recevant les premier et second vecteurs de paramètres déterminés par les capteurs des premier et second ensembles de capteurs et envoyant un vecteur de signaux de commande aux actionneurs, ce dispositif de pilotage de la liaison au sol fonctionnant de façon hiérarchisée et comprenant un superviseur déterminant en fonction des premier et second vecteurs de paramètres un vecteur cible de paramètres caractérisant le comportement cinématique et dynamique visé pour le véhicule, et un contrôleur déterminant le vecteur de signaux de commande en fonction du vecteur cible.

Dans un mode de réalisation possible de l'invention, le contrôleur comprend un module de commande haut niveau déterminant à partir du vecteur cible un vecteur haut niveau d'efforts et de couples à appliquer au véhicule suivant plusieurs axes pour que le véhicule adopte le comportement cinématique et dynamique défini par le vecteur cible.

Avantageusement, le contrôleur peut comprendre un module de commande bas niveau déterminant, à partir du vecteur haut niveau d'efforts et de couples, un vecteur bas niveau de consignes à atteindre par les dispositifs pilotés électroniquement pour que le véhicule subisse les efforts et les couples du vecteur haut niveau.

De préférence, le contrôleur peut comprendre un module de commande rapprochée déterminant, à partir des consignes du vecteur bas niveau, le vecteur de signaux de commande des actionneurs, ce vecteur de signaux de commande permettant aux dispositifs pilotés électroniquement d'atteindre les consignes du vecteur bas niveau.

Par exemple, les premier et second vecteurs de paramètres peuvent comprendre un sous-ensemble de paramètres représentant la volonté du conducteur.

Avantageusement, le superviseur peut comprendre un module de sécurité déterminant à chaque instant, en fonction des valeurs instantanées des premier et second vecteurs de paramètres, un vecteur de sécurité de paramètres importants pour la sécurité du véhicule, et des marges de sécurité par comparaison de ce vecteur de sécurité avec des valeurs maximum, ces marges de sécurité représentant l'écart entre l'état instantané du véhicule et son potentiel maximum.

De préférence, le superviseur peut comprendre un module de typologie permettant de déterminer la typologie de conduite du conducteur du véhicule en fonction des valeurs instantanées et passées des premier et second vecteurs de paramètres.

Par exemple, le superviseur peut comprendre un module de calcul du vecteur cible en fonction des marges de sécurité du véhicule, des valeurs instantanées et passées des premier et second vecteurs de paramètres, de la volonté du conducteur, et de la typologie de conduite du conducteur.

Avantageusement, le premier vecteur de paramètres peut comprendre au moins les accélérations de chaque roue, les débattements entre chaque roue et la caisse, l'angle du volant, les enfoncements de pédales de frein et d'accélération, la pression de la suspension et la vitesse de rotation des roues.

De préférence, le second vecteur de paramètres peut comprendre au moins les accélérations longitudinale, verticale et transversale de la caisse et la vitesse de lacet.

Par exemple, le vecteur cible peut comprendre au moins les accélérations longitudinale et transversale de la caisse, la vitesse de lacet, la vitesse latérale du véhicule, les angles de tangage et de roulis de la caisse et le déplacement vertical de la caisse.

Avantageusement, le superviseur et les modules de commande haut et bas niveaux du contrôleur peuvent être rassemblés dans un calculateur maître, le module de commande rapprochée du contrôleur étant réparti dans un ou plusieurs calculateurs secondaires dédiés chacun à un ou plusieurs dispositifs pilotés électroniquement.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est un schéma de principe de l'agencement général du dispositif de pilotage dans un véhicule automobile selon l'invention,
- la figure 2 est un schéma de principe du dispositif de pilotage de la figure 1,
- la figure 3 est un schéma de principe détaillé du dispositif de pilotage de la figure 1,
- la figure 4 est un schéma de principe des modules haut et bas niveau du contrôleur de la figure 3,
- la figure 5 est un schéma de principe détaillé et partiel des modules haut et bas niveau du contrôleur de la figure 3,
- la figure 6 est un autre schéma de principe de l'invention sur lequel sont identifiés certains capteurs ainsi que les dispositifs pilotés électroniquement,
- la figure 7 est une représentation schématique de l'architecture des capteurs, des actionneurs et du dispositif de pilotage.

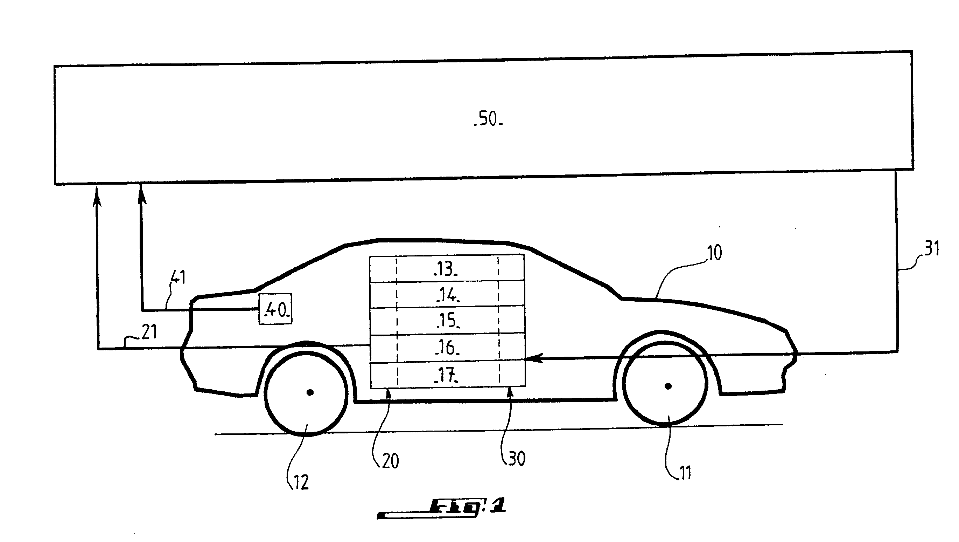

Le véhicule automobile représenté sur la figure 1 comprend, de manière classique, une caisse 10, deux roues avant 11 et deux roues arrière 12, et une pluralité de dispositifs pilotés électroniquement.

L'invention sera décrite pour un véhicule équipé d'un dispositif de freinage piloté 13 comprenant une pédale de frein, d'une direction pilotée 14 comprenant un volant, d'un dispositif de suspension pilotée 15 de la caisse 10 sur les roues, d'un moteur 16 piloté électroniquement commandé par une pédale d'accélération, et d'un différentiel 17 également piloté électroniquement.

Le dispositif de suspension 15 peut être une suspension à amortissement variable ou une suspension de type active ou semi active.

Le dispositif de freinage 13 peut être du type connu sous le sigle ESP (Electronic Stability Program), EHB (Electro-Hydraulic-Brake), ou encore EMB (Electro-Mechanical-Brake).

La direction pilotée 14 peut être une direction à assistance électro-hydraulique ou électrique, une direction active de type connu sous le sigle EAS (Electro Active Steering) ou encore une direction du type connu sous la dénomination Steer By Wire, c'est-à-dire une direction à transmission filaire entre le volant et les roues.

L'invention s'applique également à des véhicules qui ne possèdent pas tous les dispositifs pilotés électroniquement mentionnés ci-dessus, certains de ces dispositifs étant classiques c'est-à-dire non pilotés électroniquement.

L'invention a contrario peut se généraliser à des véhicules équipés d'autres dispositifs pilotés électroniquement que ceux mentionnés ci-dessus.

Selon l'invention, les dispositifs pilotés électroniquement 13 à 17 comprennent un premier ensemble de capteurs 20 déterminant un premier vecteur de paramètres 21 représentatifs de l'état des dispositifs pilotés électroniquement, et un ensemble d'actionneurs 30 permettant de modifier l'état de ces dispositifs pilotés électroniquement 13 à 17.

Par ailleurs, le véhicule comprend un second ensemble de capteurs 40 déterminant un second vecteur de paramètres 41 représentatifs de l'état du véhicule , tels que des vitesses et des accélérations suivant plusieurs axes, et un dispositif de pilotage de la liaison au sol 50 recevant les premier et second vecteurs de paramètres 21 et 41 déterminés par les capteurs des premier et second ensembles de capteurs 20 et 40 et envoyant un vecteur de signaux de commande 31 aux actionneurs 30.

Le dispositif de pilotage de la liaison au sol 50 fonctionne de façon hiérarchisée et comprend un superviseur 51 déterminant, en fonction des premier et second vecteurs de paramètres 21 et 41, un vecteur cible 511 de paramètres caractérisant le comportement cinématique visé pour le véhicule, et un contrôleur 52 déterminant le vecteur de signaux de commande 31 envoyé aux actionneurs 30 en fonction du vecteur cible 511.

Le dispositif de pilotage de la liaison au sol peut ainsi coordonner et optimiser le fonctionnement des différents dispositifs pilotés électroniquement 13 à 17, éliminant les risques de conflit entre ces dispositifs.

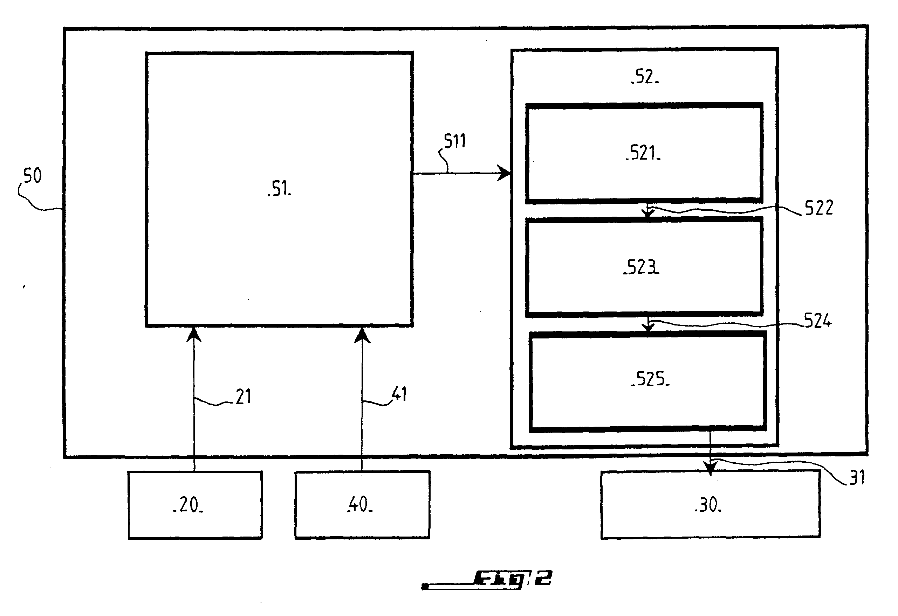

Plus précisément, comme le montre la figure 2, le contrôleur 52 comprend un module de commande haut niveau 521 déterminant, à partir du vecteur cible 511, un vecteur haut niveau 522 d'efforts et de couples à appliquer au véhicule suivant plusieurs axes pour que le véhicule adopte le comportement cinématique défini par le vecteur cible 511.

Le contrôleur 52 comprend également un module de commande bas niveau 523 déterminant, à partir du vecteur haut niveau 522 d'efforts et de couples qui lui est fourni par le module de commande haut niveau 521, un vecteur bas niveau 524 de consignes à atteindre par les dispositifs pilotés électroniquement 13 à 17 pour que le véhicule subisse les efforts et les couples du vecteur haut niveau 522.

Enfin, le contrôleur 52 comprend un module de commande rapprochée 525 déterminant, à partir du vecteur de consignes bas niveau 524, le vecteur de signaux de commande 31 des actionneurs de l'ensemble 30, ce vecteur de signaux de commande 31 permettant aux dispositifs pilotés électroniquement 13 à 17 d'atteindre les consignes du vecteur bas niveau 524.

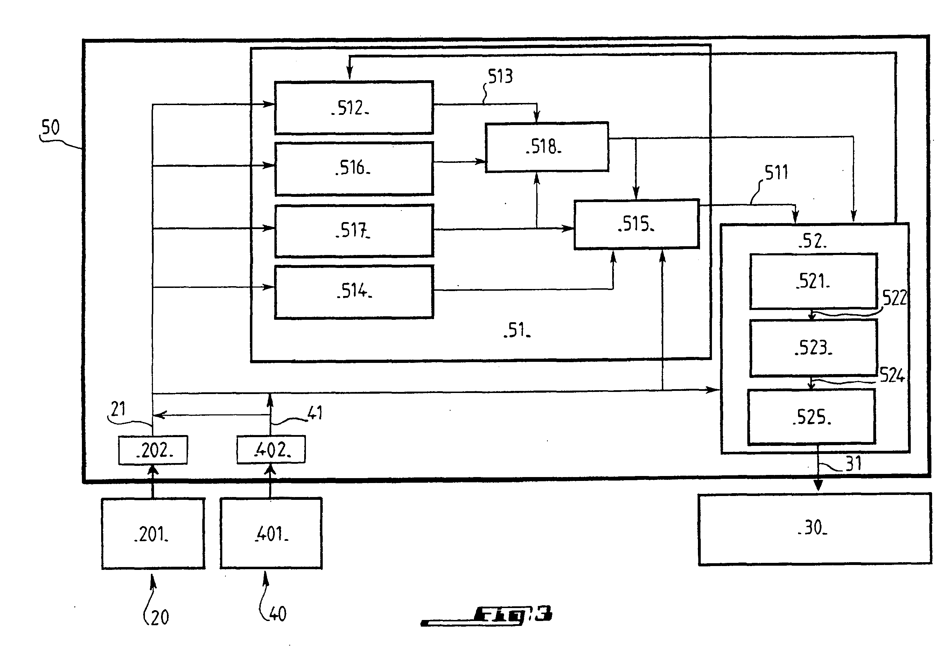

On va maintenant décrire les différents éléments servant au pilotage de la liaison au sol plus dans le détail, d'abord en référence à la figure 3.

Les capteurs des premier et second ensembles 20 et 40 sont de deux types.

Certains capteurs sont des capteurs physiques, mesurant directement les paramètres physiques recherchés et générant des signaux électriques fonction des valeurs mesurées. On utilise ce type de capteur pour les paramètres des premier et second vecteurs qui sont directement mesurables. Les signaux produits par ces capteurs sont alors directement intégrés dans le premier ou le second vecteur de paramètres 21 ou 41, après une simple conversion analogique numérique et éventuellement un traitement numérique simple, par exemple un filtrage.

D'autres capteurs comprennent une partie physique, 201 et 401 respectivement pour les capteurs des premier et second ensembles, et une partie logicielle, 202 et 402 respectivement pour les capteurs des premier et second ensembles. La partie physique mesure une grandeur physique et génère un signal électrique en fonction de la valeur mesurée. La partie logicielle comprend un module observateur et un module reconstructeur, le module observateur recevant le signal électrique produit par la partie physique du capteur et le transformant en un signal logique utilisable par le module reconstructeur. Le module reconstructeur estime par calcul, en fonction du signal logique transmis par le module observateur, le paramètre qui va être intégré dans le premier ou dans le second vecteur de paramètres 21 ou 41. Ce second type de capteur est utilisé quand un paramètre n'est pas mesurable directement sur le véhicule, et doit être estimé indirectement à partir d'une autre grandeur mesurable. Dans certains cas, la reconstruction du paramètre recherché peut nécessiter l'utilisation des valeurs d'autres paramètres, mesurées par d'autres capteurs.

Il est à noter que les premier et second vecteurs 21 et 41 peuvent comprendre également des paramètres qui ne sont pas directement associés à un capteur et qui sont estimés en fonction de plusieurs autres paramètres, mesurés directement ou reconstruits.

A contrario, la reconstruction d'un paramètre recherché peut nécessiter la mise en oeuvre de plusieurs capteurs physiques associés à une partie logicielle unique.

Le nombre de capteurs des premier et second ensembles peut donc indifféremment être inférieur, égal ou supérieur au nombre de paramètres inclus dans les premier et second vecteurs 21 et 41.

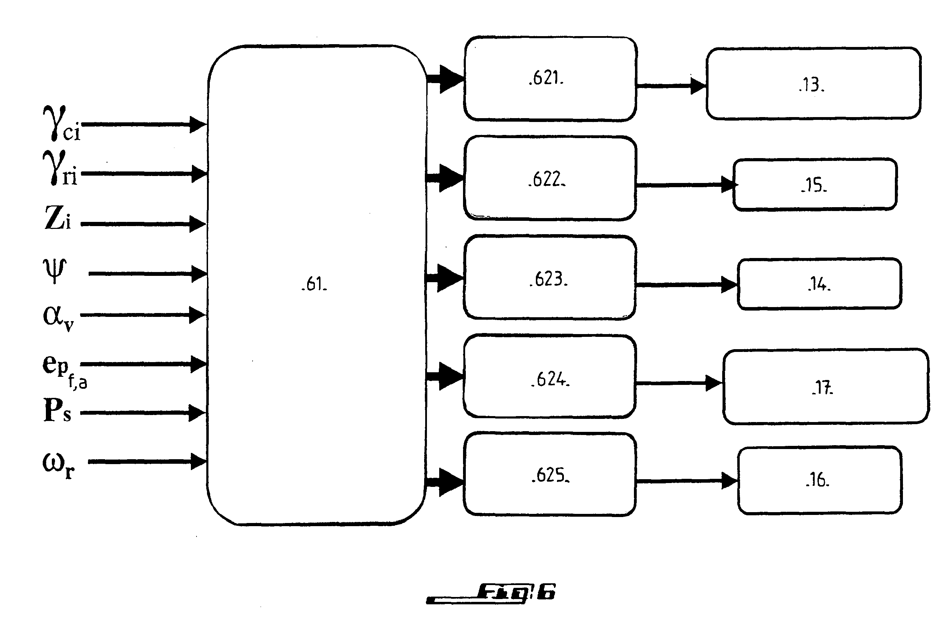

Dans le mode de réalisation de l'invention représenté sur la figure 6, le premier vecteur de paramètres 21 comprend au moins les accélérations de chaque roue γri, les débattements entre chaque roue et la caisse Zi, l'angle du volant αv, les enfoncements epf et epa respectivement des pédales de frein et d'accélération, la pression de la suspension Ps et la vitesse de rotation des roues ωr.

Le second vecteur de paramètres 41 comprend au moins les accélérations longitudinale, verticale et transversale de la caisse 10, respectivement γcl, γcv, γct, et la vitesse de lacet ψ.

Les capteurs suivants sont utilisés pour déterminer ces paramètres : des capteurs d'accélérations transversale, longitudinale et verticale de la caisse, un gyromètre de mesure de la vitesse de lacet, des capteurs de débattement roue-caisse, des capteurs d'accélération roues, des capteurs d'angle volant, des capteurs d'enfoncement des pédales de frein et d'accélération, et des capteurs de vitesses de rotation des roues.

Le superviseur 51 a pour mission générale d'évaluer la situation dans laquelle se trouve le véhicule, de reconnaître la typologie de conduite du conducteur, d'estimer les marges de sécurité disponibles et de calculer le comportement cinématique visé pour le véhicule.

Pour cela, le superviseur 51 comprend un module d'évaluation de la situation de vie courante du véhicule 516. Ce module comprend lui-même des moyens d'enregistrement des valeurs des paramètres des premier et second vecteurs 21 et 41, et des moyens d'analyse permettant, à partir des valeurs instantanées et passées des paramètres des premier et second vecteurs 21 et 41, de reconnaître la situation dans laquelle se trouve le véhicule parmi une liste prédéterminée de situations de vie typiques. Ces situations typiques sont par exemple : déplacement du véhicule en ligne droite à vitesse stabilisée, accélération ou décélération en ligne droite, virage à vitesse stabilisée, ou arrêt d'urgence.

Le superviseur 51 comprend également un module d'évaluation de la situation de vie souhaitée du véhicule 517. La situation de vie souhaitée est la situation de vie vers laquelle le conducteur souhaite faire évoluer le véhicule.

De façon à permettre cette évaluation, les premier et second vecteurs de paramètres 21 et 41 comprennent un sous-ensemble de paramètres représentant la volonté du conducteur. Parmi ces paramètres, on peut citer par exemple l'angle du volant αv, et les enfoncements de pédales de frein et d'accélération epf et epa.

Ce module 517 comprend des moyens d'analyse permettant, à partir des valeurs instantanées et passées des paramètres des premier et second vecteurs 21 et 41, en particulier les paramètres exprimant la volonté du conducteur, et de la situation de vie courante déterminée par le module 516, de reconnaître la situation de vie souhaitée parmi une liste prédéterminée de situations de vie typiques. Cette liste prédéterminée est en général identique à la liste prédéterminée de situations de vie typiques dont se sert le module d'évaluation de la situation de vie courante du véhicule 516.

Ces moyens d'analyse comprennent par exemple une arborescence indiquant, pour chaque situation de vie, à quelles conditions le véhicule peut arriver à une autre situation de vie. Ainsi, en partant de la situation de vie « déplacement en ligne droite à vitesse constante », on arrive à la situation « accélération en ligne droite » à la condition que le paramètre « enfoncement de la pédale d'accélération epa » indique une accélération. En partant de la même situation, on arrive à la situation « virage à vitesse constante » si le paramètre « angle du volant αv » indique une volonté du conducteur de tourner.

Le superviseur 51 comprend encore un module de sécurité 512 déterminant à chaque instant, en fonction des valeurs instantanées des premier et second vecteurs de paramètres 21 et 41, un vecteur de sécurité 513 de paramètres importants pour la sécurité du véhicule, et des marges de sécurité par comparaison de ce vecteur de sécurité 513 avec des valeurs maximum.

Ces valeurs maximum sont prédéterminées ou sont calculées par le module de sécurité 512 en fonction de la situation de vie courante du véhicule. De même, la nature des paramètres importants pour la sécurité du véhicule compris dans le vecteur de sécurité peut varier en fonction de la situation de vie courante.

Ces paramètres de sécurité comprennent par exemple dans la situation de vie « virage à vitesse constante » au moins les vitesses longitudinale et transversale de la caisse 10, et la vitesse de lacet ψ.

Les marges de sécurité représentent l'écart entre l'état instantané du véhicule et son potentiel maximum.

Le superviseur 51 comprend encore un module de typologie 514 permettant de déterminer la typologie de conduite du conducteur du véhicule en fonction des valeurs instantanées et passées des paramètres des premier et second vecteurs 21 et 41. Le module de typologie comprend des moyens pour sélectionner un type de conduite dans une liste prédéterminée, comprenant par exemple conduite sportive, conduite nerveuse, conduite calme, conduite prudente.

Le superviseur 51 comprend un module de calcul 515 du vecteur cible 511 en fonction de la situation de vie courante du véhicule évaluée par le module d'évaluation de la situation de vie courante du véhicule 516, des marges de sécurité du véhicule calculées par le module de sécurité 512, des valeurs instantanées et passées des paramètres des premier et second vecteurs 21 et 41, de la volonté du conducteur interprétée par le module d'évaluation de la situation de vie souhaitée du véhicule 517, et de la typologie de conduite du conducteur évaluée par le module de typologie 514.

Ce vecteur cible 511 comprend au moins les accélérations longitudinale et transversale de la caisse 10, respectivement γlréf et γtréf, la vitesse de lacet ψréf, la vitesse latérale du véhicule Vyréf, les angles de tangage et de roulis ϕréf et θréf de la caisse 10, le déplacement vertical hréf de la caisse 10, et éventuellement l'angle des roues αréf si le véhicule est équipé d'une direction active.

Le superviseur 51 comprend enfin un dernier module appelé matrice d'actions 518 dont le rôle sera détaillé plus loin. La matrice d'action 518 reçoit des informations du module de sécurité 512 et des modules d'évaluation de la situation de vie courante 516 et d'évaluation de la situation de vie souhaitée 517.

Le contrôleur 52 a pour mission générale de calculer le vecteur de signaux de commande 31 à envoyer aux actionneurs 30 en fonction du vecteur cible 511 envoyé par le superviseur 51 et de lois de commande prédéterminées.

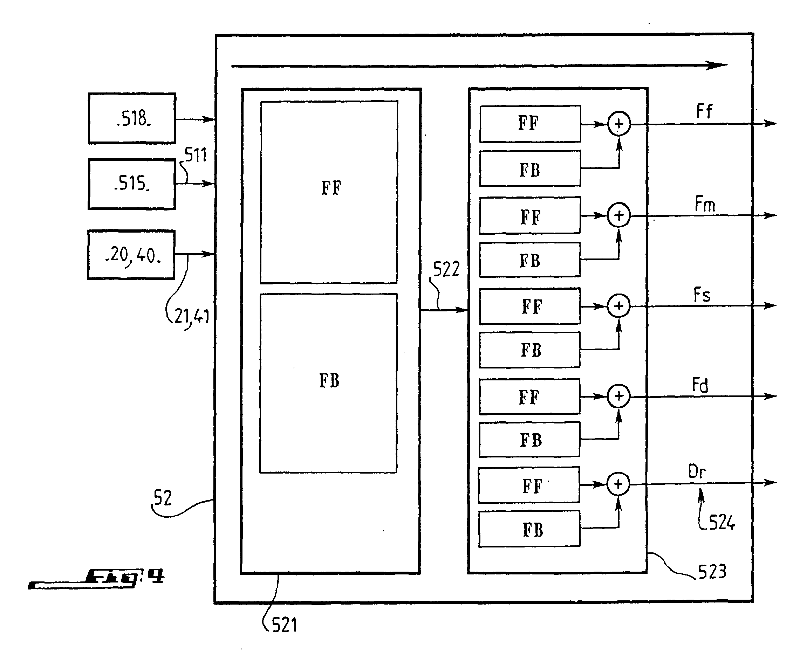

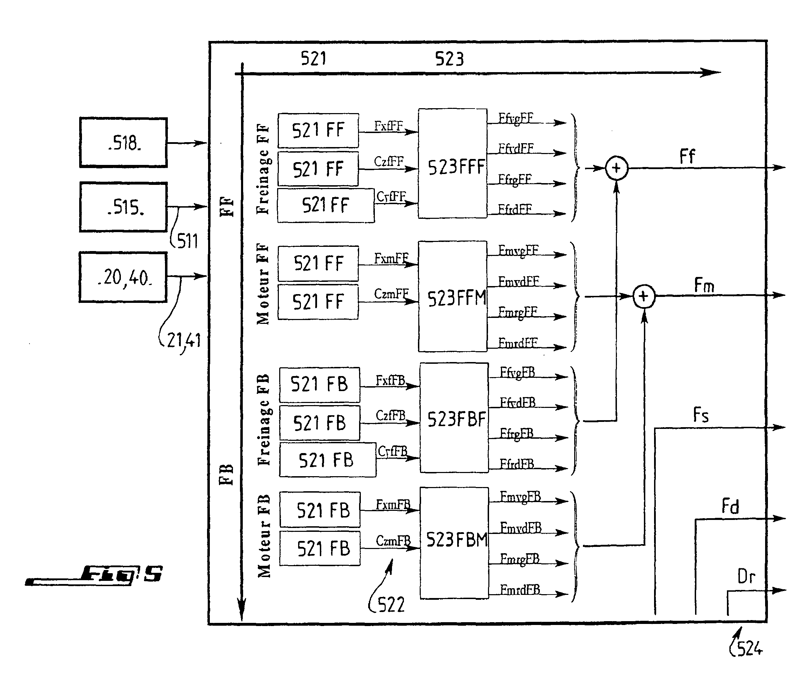

Le fonctionnement des modules de commande de haut et bas niveaux 521 et 523 est détaillé sur les figures 4 et 5 .

Le module de commande de haut niveau 521 comprend des moyens pour calculer à chaque instant une consigne d'efforts et de couples pour le véhicule suivant les axes longitudinal, transversal et vertical, cette consigne étant le vecteur haut niveau 522, à partir du vecteur cible 511 et des premier et second vecteurs de paramètres 21 et 41.

Ce calcul est réalisé en utilisant des algorithmes de commande multivariables de type régulatrice (FB : Feed Back), généralement utilisés en automatique, associés à une commande prédictive (FF : Feed Forward). Les algorithmes de commande multivariables utilisés sont par exemple ceux connus sous le sigle anglo-saxon RST (Robust Stability Tracking) ou sous le sigle CES (Contrôle d'Etat Standard). Il est également possible d'utiliser des commandes non linéaires, de type stabilisation en temps fini, modes glissants ou autres.

Les paramètres du vecteur haut niveau 522 peuvent être répartis en deux groupes, un groupe de paramètres FF calculés par la commande prédictive, et un groupe de paramètres FB calculés par la commande régulatrice.

Le module de commande de bas niveau 523 comprend des moyens pour transformer à chaque instant la consigne d'efforts et de couples pour le véhicule en des consignes d'efforts, de couples ou de déplacement pour les différents dispositifs pilotés électroniquement, ces consignes étant rassemblées dans le vecteur bas niveau 524.

Les paramètres du vecteur de consignes bas niveau 524 comprennent au moins les couples de freinage appliqués à chaque roue Ff, les couples moteurs appliqués à chaque roue Fm, les efforts des suspensions de chaque roue Fs, le couple d'assistance de direction Fd et les déplacements de chaque roue Dr.

La transformation de la consigne de haut niveau en une consigne de bas niveau se fait essentiellement par répartition des couples et des efforts appliqués au véhicule en couples et en efforts appliqués aux quatre roues. Cette répartition s'applique aux groupes de paramètres FF et FB.

Le module de commande rapprochée 525 comprend des moyens permettant de déterminer les consignes à appliquer à chaque actionneur des dispositifs pilotés électroniquement pour réaliser les consignes du vecteur bas niveau 524.

Par exemple, dans le cas d'une suspension active comprenant un vérin par roue, ces vérins étant pilotés en débit par des servovalves et comprenant chacun un capteur de pression, le module de commande rapprochée 525 va déterminer la consigne de débit dans les servovalves de façon à obtenir la pression de consigne, qui aura été déterminée elle-même par le module de commande de bas niveau 523.

La figure 5 illustre de façon encore un peu plus détaillée la façon dont les consignes pour les couples moteur et les couples de freinage des roues sont déterminées.

Les consignes de bas niveau pour les autres dispositifs pilotés électroniquement sont déterminées de façon très similaire.

Les groupes de paramètres FF et FB comprennent chacun un sous-groupe de paramètres associé au freinage, respectivement les sous-groupes Freinage FF et Freinage FB, et un sous-groupe de paramètres associé aux couples ou efforts moteurs, respectivement les sous-groupes Moteur FF et Moteur FB .

Le sous-groupe Moteur FF comprend ainsi au moins l'effort longitudinal moteur FxmFF du véhicule et le couple de lacet moteur CzmFF du véhicule déterminés par la commande prédictive.

Le sous-groupe Freinage FF comprend au moins l'effort longitudinal freineur FxfFF du véhicule, le couple de lacet freineur CzfFF du véhicule, et le couple de tangage freineur CyfFF du véhicule, déterminés par la commande prédictive.

Chacun de ces paramètres est calculé par un sous-module 521FF du module de commande haut niveau 521.

De même, le sous-groupe Moteur FB comprend au moins l'effort longitudinal moteur du véhicule FxmFB et le couple de lacet moteur CzmFB du véhicule déterminés par la commande régulatrice.

Le sous-groupe Freinage FB comprend au moins l'effort longitudinal freineur FxfFB du véhicule, le couple de lacet freineur CzfFB du véhicule, et le couple de tangage freineur CyfFB du véhicule, déterminés par la commande régulatrice.

Chacun de ces paramètres est calculé par un sous-module 521FB du module de commande haut niveau 521.

Comme le montre la figure 5, les lois de commande du module de commande bas niveau 523 permettent de transformer les paramètres du sous-groupe Moteur FF en un premier groupe de quatre efforts moteurs FmvgFF, FmvdFF, FmrgFF et FmrdFF appliqués respectivement aux roues avant gauche, avant droite, arrière gauche et arrière droite. Cette transformation est effectuée par un sous-module répartiteur 523FFM du module de commande bas niveau 523.

De même, les paramètres du sous-groupe Moteur FB sont transformés en un second groupe de quatre efforts moteurs FmvgFB, FmvdFB, FmrgFB et FmrdFB appliqués respectivement aux roues avant gauche, avant droite, arrière gauche et arrière droite. Cette transformation est effectuée par un sous-module répartiteur 523 FBM du module de commande bas niveau 523.

Les consignes d'efforts moteurs appliqués aux quatre roues sont obtenues simplement en additionnant les efforts moteurs des premier et second groupes pour chaque roue.

Pour les couples de freinage, le procédé est le même, ces transformations étant effectuées par les sous-modules 523 FFF et 523 FBF.

Les paramètres du sous-groupe Freinage FF sont transformés en un premier groupe de quatre couples de freinage FfvgFF, FfvdFF, FfrgFF et FfrdFF appliqués respectivement aux roues avant gauche, avant droite, arrière gauche et arrière droite.

De même, les paramètres du sous-groupe Freinage FB sont transformés en un second groupe de quatre couples de freinage FfvgFB, FfvdFB, FfrgFB et FfrdFB appliqués respectivement aux roues avant gauche, avant droite, arrière gauche et arrière droite.

Les consignes de couples de freinage appliqués aux quatre roues sont obtenues simplement en additionnant les couples de freinage des premier et second groupes pour chaque roue.

Les algorithmes de calcul des différents modules du contrôleur 52 sont prédéterminés. Néanmoins, la matrice d'action 518 du superviseur 51 peut substituer aux algorithmes courants d'autres algorithmes si nécessaire, pour adapter le dispositif de pilotage à des situations nouvelles. Cette substitution est effectuée par exemple en cas de marche dégradée du dispositif de pilotage de la liaison au sol 50, quand un capteur ou un actionneur est en panne.

De même, la matrice d'action 518 peut, dans les mêmes circonstances, modifier les règles de calcul du vecteur cible 511 implantées dans le module de calcul 515 du superviseur 51.

On notera sur la figure 3 que le contrôleur 52 est relié par une liaison directe aux capteurs. Cette liaison directe permet, dans les cas simples comme un freinage normal en ligne droite, de ne pas faire intervenir le superviseur 51. Celui-ci est ainsi déchargé d'une partie de son travail, et ses ressources peuvent être consacrées à traiter les cas plus complexes.

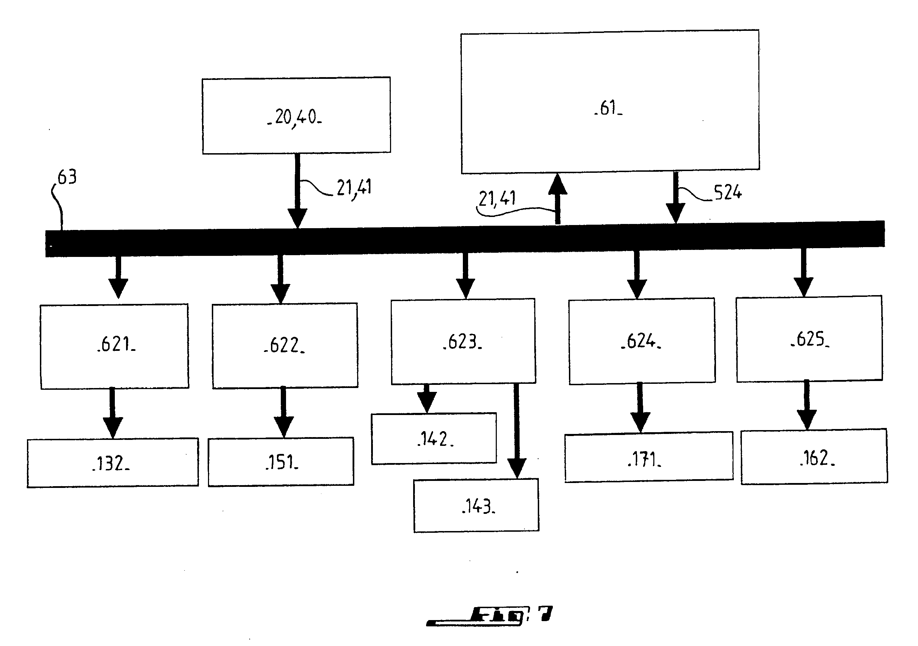

Comme le montrent les figures 6 et 7, le superviseur 51 et les modules de commande haut et bas niveaux 521 et 523 du contrôleur 52 sont rassemblés dans un calculateur maître 61, le module de commande rapproché 525 du contrôleur 52 étant réparti dans un ou plusieurs calculateurs secondaires dédiés chacun à un ou plusieurs dispositifs pilotés électroniquement.

Il est à noter que la partie logicielle des capteurs peut être intégrée dans le calculateur maître 61.

Dans un mode de réalisation préféré, il y a un calculateur secondaire par dispositif piloté électroniquement, soit cinq calculateurs secondaires référencés 621 à 625 dédiés respectivement au dispositif de freinage 13, au dispositif de suspension 15, à la direction 14, au différentiel 17 et au moteur 16.

Le véhicule comprend également un réseau de transmission de données 63. Les premier et second ensembles de capteurs 20 et 40, le calculateur maître 61 et les calculateurs secondaires 621 à 625 sont tous reliés à ce réseau 63.

Les premier et second ensembles de capteurs 20 et 40 envoient les premier et second vecteurs 21 et 41 au calculateur maître 61 par ce réseau. De même, le calculateur maître 61 envoie le vecteur de consignes bas niveau 524 aux calculateurs secondaires par ce réseau 63.

Les actionneurs sont directement reliés aux calculateurs secondaires 621 à 625. Ces actionneurs sont typiquement des électrovannes 132 pour un dispositif de freinage électro-hydraulique, des servovalves 151 pour un dispositif de suspension, une vanne 142 ou un moteur de braquage 143 dans le cas d'une direction à assistance respectivement électro-hydraulique ou électrique, des électrovannes 171 pour un différentiel piloté, et une vanne papillon motorisée 162 pour un moteur.

Les calculateurs secondaires peuvent également envoyer les informations par le réseau 63 au calculateur maître. Cette possibilité est utilisée en marche dégradée du dispositif de pilotage 50, en cas de panne d'un capteur par exemple.

On comprend donc bien que le dispositif de pilotage de l'invention permet de coordonner l'ensemble des dispositifs pilotés électroniquement du véhicule et d'éliminer les conflits entre les systèmes. De plus, ce dispositif de pilotage évalue continuellement les marges de sécurité disponibles en fonction de la situation du véhicule et les prend en compte pour déterminer les consignes des actionneurs, ce qui accroît la sécurité des passagers.

## Revendications

1. Véhicule automobile comprenant une caisse (10), deux roues avant (11) et deux roues arrière (12), et une pluralité de dispositifs pilotés électroniquement, tels qu'un dispositif de freinage (13), une direction (14), un dispositif de suspension (15) de la caisse (10), un moteur (16), un différentiel (17), les dispositifs pilotés électroniquement comprenant un premier ensemble de capteurs (20) déterminant un premier vecteur (21) de paramètres représentatifs de l'état des dispositifs pilotés électroniquement et un ensemble d'actionneurs (30) permettant de modifier l'état de ces dispositifs, **caractérisé en ce que** le véhicule comprend un second ensemble de capteurs (40) déterminant un second vecteur (41) de paramètres représentatifs de l'état du véhicule , tels que des vitesses et des accélérations suivant plusieurs axes, et un dispositif de pilotage de la liaison au sol (50) recevant les premier et second vecteurs (21, 41) de paramètres déterminés par les capteurs des premier et second ensembles de capteurs (20, 40) et envoyant un vecteur de signaux de commande (31) aux actionneurs (30), ce dispositif de pilotage de la liaison au sol (50) fonctionnant de façon hiérarchisée et comprenant un superviseur (51) déterminant en fonction des premier et second vecteurs (21, 41) de paramètres un vecteur cible (511) de paramètres caractérisant le comportement cinématique et dynamique visé pour le véhicule, et un contrôleur (52) déterminant le vecteur de signaux de commande (31) en fonction du vecteur cible (511).

2. Véhicule automobile suivant la revendication 1, **caractérisé en ce que** le contrôleur (52) comprend un module de commande haut niveau (521) déterminant à partir du vecteur cible (511) un vecteur haut niveau (522) d'efforts et de couples à appliquer au véhicule suivant plusieurs axes pour que le véhicule adopte le comportement cinématique et dynamique défini par le vecteur cible (511).

3. Véhicule automobile suivant la revendication 2, **caractérisé en ce que** le contrôleur (52) comprend un module de commande bas niveau (523) déterminant, à partir du vecteur haut niveau (522) d'efforts et de couples, un vecteur bas niveau (524) de consignes à atteindre par les dispositifs pilotés électroniquement pour que le véhicule subisse les efforts et les couples du vecteur haut niveau (522).

4. Véhicule automobile suivant la revendication 3, **caractérisé en ce que** le contrôleur (52) comprend un module de commande rapprochée (525) déterminant, à partir des consignes du vecteur bas niveau (524), le vecteur de signaux de commande (31) des actionneurs (30), ce vecteur de signaux de commande (31) permettant aux dispositifs pilotés électroniquement d'atteindre les consignes du vecteur de bas niveau (524).

5. Véhicule automobile suivant l'une quelconque des revendications 1 à 4, **caractérisé en ce que** les premier et second vecteurs de paramètres (21, 41) comprennent un sous-ensemble de paramètres représentant la volonté du conducteur.

6. Véhicule automobile suivant l'une quelconque des revendications 1 à 5, **caractérisé en ce que** le superviseur (51) comprend un module de sécurité (512) déterminant à chaque instant, en fonction des valeurs instantanées des premier et second vecteurs de paramètres (21, 41), un vecteur de sécurité (513) de paramètres importants pour la sécurité du véhicule, et des marges de sécurité par comparaison de ce vecteur de sécurité (513) avec des valeurs maximum, ces marges de sécurité représentant l'écart entre l'état instantané du véhicule et son potentiel maximum.

7. Véhicule automobile suivant l'une quelconque des revendications 1 à 6, **caractérisé en ce que** le superviseur (51) comprend un module de typologie (514) permettant de déterminer la typologie de conduite du conducteur du véhicule en fonction des valeurs instantanées et passées des premier et second vecteurs de paramètres (21, 41).

8. Véhicule automobile suivant les revendications combinées 5, 6 et 7, **caractérisé en ce que** le superviseur (51) comprend un module de calcul (515) du vecteur cible (511) en fonction des marges de sécurité du véhicule, des valeurs instantanées et passées des premier et second vecteurs de paramètres (21, 41), de la volonté du conducteur, et de la typologie de conduite du conducteur.

9. Véhicule automobile suivant l'une quelconque des revendications 1 à 8, **caractérisé en ce que** le premier vecteur de paramètres (21) comprend au moins les accélérations de chaque roue (11, 12), les débattements entre chaque roue (11, 12) et la caisse (10), l'angle du volant, les enfoncements de pédales de frein et d'accélération, la pression de la suspension (15) et la vitesse de rotation des roues (11, 12).

10. Véhicule automobile suivant l'une quelconque des revendications 1 à 9, **caractérisé en ce que** le second vecteur de paramètres (41) comprend au moins les accélérations longitudinale, verticale et transversale de la caisse (10) et la vitesse de lacet.

11. Véhicule automobile suivant l'une quelconque des revendications 1 à 10, **caractérisé en ce que** le vecteur cible (511) comprend au moins les accélérations longitudinale et transversale de la caisse (10), la vitesse de lacet, la vitesse latérale du véhicule, les angles de tangage et de roulis de la caisse (10) et le déplacement vertical de la caisse (10).

12. Véhicule automobile suivant l'une quelconque des revendications 1 à 11, **caractérisé en ce que** le superviseur (51) et les modules de commande haut et bas niveaux (521, 523) du contrôleur (52) sont rassemblés dans un calculateur maître (61), le module de commande rapprochée (525) du contrôleur (52) étant réparti dans un ou plusieurs calculateurs secondaires (621 à 625) dédiés chacun à un ou plusieurs dispositifs pilotés électroniquement.

## Claims

1. Motor vehicle comprising a body shell (10), two front wheels (11) and two rear wheels (12), and a plurality of electronically operated devices, such as a braking device (13), a steering (14), a device (15) for suspending the body shell (10), an engine (16), a differential (17), the electronically operated devices comprising a first set of sensors (20) determining a first vector (21) of parameters representing the state of the electronically operated devices and a set of actuators (30) making it possible to modify the state of these devices, **characterized in that** the vehicle comprises a second set of sensors (40) determining a second vector (41) of parameters representative of the state of the vehicle, such as speeds and accelerations on several axes, and a road-holding control device (50) receiving the first and second vectors (21, 41) of parameters determined by the sensors of the first and second sets of sensors (20, 40) and sending a vector of control signals (31) to the actuators (30), this road-holding control device (50) operating in a hierarchical way and comprising a supervisor (51) determining, as a function of the first and second vectors (21, 41) of parameters, a target vector (511) of parameters characterizing the targeted kinematic and dynamic behaviour of the vehicle, and a controller (52) determining the vector of control signals (31) as a function of the target vector (511).

2. Motor vehicle according to Claim 1, **characterized in that** the controller (52) comprises a high level control module (521) determining, based on the target vector (511), a high level vector (522) of forces and torques to be applied to the vehicle on several axes so that the vehicle adopts the kinematic and dynamic behaviour defined by the target vector (511).

3. Motor vehicle according to Claim 2, **characterized in that** the controller (52) comprises a low level control module (523) determining, based on the high level vector (522) of forces and torques, a low level vector (524) of set points to be achieved by the electronically operated devices so that the vehicle sustains the forces and torques of the high level vector (522).

4. Motor vehicle according to Claim 3, **characterized in that** the controller (52) comprises a reconciled control module (525) determining, based on the set points of the low level vector (524), the vector of control signals (31) of the actuators (30), this vector of control signals (31) allowing the electronically operated devices to achieve the set points of the low level vector (524).

5. Motor vehicle according to any one of Claims 1 to 4, **characterized in that** the first and second vectors of parameters (21, 41) comprise a subset of parameters representing the wish of the driver.

6. Motor vehicle according to any one of Claims 1 to 5, **characterized in that** the supervisor (51) comprises a safety module (512) determining at each moment, according to the instantaneous values of the first and second vectors of parameters (21, 41), a safety vector (513) of parameters that are important for the safety of the vehicle, and safety margins by comparison of this safety vector (513) with maximum values, these safety margins representing the difference between the instantaneous state of the vehicle and its maximum potential.

7. Motor vehicle according to any one of Claims 1 to 6, **characterized in that** the supervisor (51) comprises a typology module (514) making it possible to determine the typology of driving of the driver of the vehicle as a function of the instantaneous and past values of the first and second vectors of parameters (21, 41).

8. Motor vehicle according to the combined Claims 5, 6 and 7, **characterized in that** the supervisor (51) comprises a module (515) for computing the target vector (511) as a function of the safety margins of the vehicle, the instantaneous and past values of the first and second vectors of parameters (21, 41), the wish of the driver, and the typology of driving of the driver.

9. Motor vehicle according to any one of Claims 1 to 8, **characterized in that** the first vector of parameters (21) comprises at least the accelerations of each wheel (11, 12), the clearances between each wheel (11, 12) and the body shell (10), the angle of the steering wheel, the depressions of the brake and accelerator pedals, the pressure of the suspension (15) and the speed of rotation of the wheels (11, 12).

10. Motor vehicle according to any one of Claims 1 to 9, **characterized in that** the second vector of parameters (41) comprises at least the longitudinal, vertical and transverse accelerations of the body shell (10) and the speed of yaw.

11. Motor vehicle according to any one of Claims 1 to 10, **characterized in that** the target vector (511) comprises at least the longitudinal and transverse accelerations of the body shell (10), the speed of yaw, the lateral speed of the vehicle, the angles of pitch and roll of the body shell (10) and the vertical movement of the body shell (10).

12. Motor vehicle according to any one of Claims 1 to 11, **characterized in that** the supervisor (51) and the high and low level control modules (521, 523) of the controller (52) are assembled in a master computer (61), the reconciled control module (525) of the controller (52) being distributed in one or more secondary computers (621 to 625) each dedicated to one or more electronically operated devices.

## Patentansprüche

1. Kraftfahrzeug, das einen Kasten (10), zwei Vorderräder (11) und zwei Hinterräder (12) sowie mehrere elektronisch gesteuerte Vorrichtungen, wie etwa eine Bremsvorrichtung (13), eine Lenkvorrichtung (14), eine Federungsvorrichtung (15) des Kastens (10), einen Motor (16) und ein Ausgleichsgetriebe (17), aufweist, wobei die elektronisch gesteuerten Vorrichtungen eine erste Anordnung aus Sensoren (20), die einen ersten Vektor (21) von Parametern bestimmen, die für den Zustand der elektronisch gesteuerten Vorrichtungen repräsentativ sind, und eine Anordnung aus Aktuatoren (30) aufweisen, die eine Änderung des Zustands der elektronisch gesteuerten Vorrichtungen ermöglichen, **dadurch gekennzeichnet, dass** das Fahrzeug eine zweite Anordnung aus Sensoren (40), die einen zweiten Vektor (41) von Parametern bestimmen, die für den Zustand des Fahrzeugs, wie etwa die Geschwindigkeiten und die Beschleunigungen entlang mehrerer Achsen, repräsentativ sind, sowie eine Vorrichtung zur Steuerung der Verbindung mit dem Boden (50) aufweist, die den ersten und den zweiten Vektor (21, 41) von Parametern, die von den Sensoren der ersten und der zweiten Anordnung aus Sensoren (20, 40) bestimmt wurden, empfängt und einen Steuersignalevektor (31) an die Aktuatoren (30) sendet, wobei die Vorrichtung zur Steuerung der Verbindung mit dem Boden (50) auf hierarchische Weise arbeitet und eine Überwachungseinrichtung (51), die in Abhängigkeit des ersten und des zweiten Vektors (21, 41) von Parametern einen Zielvektor (511) von Parametern bestimmt, die das dynamische und kinematische Verhalten kennzeichnen, das für das Fahrzeug angestrebt ist, und eine Kontrolleinrichtung (52) aufweist, die in Abhängigkeit des Zielvektors (511) den Steuersignalevektor (31) bestimmt.

2. Kraftfahrzeug nach Anspruch 1, **dadurch gekennzeichnet, dass** die Kontrolleinrichtung (52) ein Steuermodul höherer Ebene (521) aufweist, das ausgehend vom Zielvektor (511) einen Vektor höherer Ebene (522) von Kräften und Drehmomenten bestimmt, die es an das Fahrzeug entlang mehrerer Achsen anzulegen gilt, damit das Fahrzeug das dynamische und kinematische Verhalten annimmt, das vom Zielvektor (511) definiert ist.

3. Kraftfahrzeug nach Anspruch 2, **dadurch gekennzeichnet, dass** die Kontrolleinrichtung (52) ein Steuermodul niedrigerer Ebene (523) aufweist, das ausgehend vom Vektor höherer Ebene (522) von Kräften und Drehmomenten einen Vektor niedrigerer Ebene (524) von Anweisungen bestimmt, die es von den elektronisch gesteuerten Vorrichtungen zu erfüllen gilt, damit das Fahrzeug die Kräfte und Drehmomente des Vektors höherer Ebene (522) erfährt.

4. Kraftfahrzeug nach Anspruch 3, **dadurch gekennzeichnet, dass** die Kontrolleinrichtung (52) ein Nahsteuermodul (525) aufweist, das ausgehend von den Anweisungen des Vektors niedrigerer Ebene (524) den Steuersignalevektor (31) der Aktuatoren (30) bestimmt, wobei der Steuersignalevektor (31) es den elektronisch gesteuerten Vorrichtungen ermöglicht, die Anweisungen des Vektors niedrigerer Ebene (524) zu erfüllen.

5. Kraftfahrzeug nach einem der Ansprüche 1 bis 4, **dadurch gekennzeichnet, dass** der erste und der zweite Vektor von Parametern (21, 41) eine Untergruppe von Parametern aufweisen, die den Willen des Fahrers repräsentieren.

6. Kraftfahrzeug nach einem der Ansprüche 1 bis 5, **dadurch gekennzeichnet, dass** die Überwachungseinrichtung (51) ein Sicherheitsmodul (512) aufweist, das zu jedem Zeitpunkt in Abhängigkeit der Momentanwerte des ersten und des zweiten Vektors von Parametern (21, 41) einen Sicherheitsvektor (513) von Parametern, die für die Sicherheit des Fahrzeugs von Bedeutung sind, und Sicherheitsmargen für den Vergleich des Sicherheitsvektors (513) mit Maximalwerten bestimmt, wobei die Sicherheitsmargen den Abstand zwischen dem Momentanzustand des Fahrzeugs und seinem potentiellen Maximum darstellen.

7. Kraftfahrzeug nach einem der Ansprüche 1 bis 6, **dadurch gekennzeichnet, dass** die Überwachungseinrichtung (51) ein Typologiemodul (514) aufweist, das die Bestimmung der Fahrtypologie des Fahrers des Fahrzeugs in Abhängigkeit der Momentanwerte und der vergangenen Werte des ersten und des zweiten Vektors von Parametern (21, 41) ermöglicht.

8. Kraftfahrzeug nach den kombinierten Ansprüchen 5, 6 und 7, **dadurch gekennzeichnet, dass** die Überwachungseinrichtung (51) ein Modul zur Berechnung (515) des Zielvektors (511) in Abhängigkeit der Sicherheitsmargen des Fahrzeugs, der Momentanwerte und der vergangenen Werte des ersten und des zweiten Vektors von Parametern (21, 41), des Willens des Fahrers und der Fahrtypologie des Fahrers aufweist.

9. Kraftfahrzeug nach einem der Ansprüche 1 bis 8, **dadurch gekennzeichnet, dass** der erste Vektor von Parametern (21) mindestens die Beschleunigungen eines jeden Rads (11, 12), die Federwege zwischen jedem Rad (11, 12) und dem Kasten (10), den Lenkradwinkel, die Niederdrückungen des Brems- und des Gaspedals, den Druck der Federung (15) und die Drehgeschwindigkeit der Räder (11, 12) enthält.

10. Kraftfahrzeug nach einem der Ansprüche 1 bis 9, **dadurch gekennzeichnet, dass** der zweite Vektor von Parametern (41) mindestens die Längs-, die Vertikal- und die Querbeschleunigung des Kastens (10) und die Giergeschwindigkeit enthält.

11. Kraftfahrzeug nach einem der Ansprüche 1 bis 10, **dadurch gekennzeichnet, dass** der Zielvektor (511) mindestens die Längs- und die Querbeschleunigung des Kastens (10), die Giergeschwindigkeit, die seitliche Geschwindigkeit des Fahrzeugs, den Nick- und den Rollwinkel des Kastens (10) und die vertikale Verschiebung des Kastens (10) enthält.

12. Kraftfahrzeug nach einem der Ansprüche 1 bis 11, **dadurch gekennzeichnet, dass** die Überwachungseinrichtung (51) und die Steuermodule höherer und niedrigerer Ebene (521, 523) der Kontrolleinrichtung (52) in einem Hauptrechner (61) zusammengefasst sind, wobei das Nahsteuermodul (525) der Kontrolleinrichtung (52) auf einen oder mehrere Nebenrechner (621 bis 625) aufgeteilt ist, die jeweils einer oder mehreren elektronisch gesteuerten Vorrichtungen zugeordnet sind.
